# EUROPEAN PATENT APPLICATION

(11) **EP 2 530 903 A1**
(43) Date of publication of application: **05.12.2012**
(21) Application number: 12003840.1
(22) Date of filing: 15.05.2012
(51) Int. Cl.: H04L 29/08

(54) **Bridged control of multiple media devices via a selected user interface in a wireless media network**

(30) Priority: 31.05.2011 US 201161491838 P; 20.12.2011 US 201113331449
(71) Applicant: Broadcom Corporation, Irvine, CA 92617 (US)
(72) Inventor: Dougherty, James F., 95037 Morgan Hill, CA (US); Rajakaruanayake, Yasantha, 94582 Ramon, CA (US); Loo, Patrick, Cambridge, CB24 9LD (GB); Zhang, Jian, 94040 Mountain View, CA (US)
(74) Representative: Jehle, Volker Armin

(57) **Abstract**

A wireless media network enables bridged control of multiple media devices via multiple different transport media. The system enables input devices to control various output devices by mapping the input devices to the output devices. The system can map inputs to controls for output devices to enable a user to control various output devices via inputs initially provided to a different input device in a media device network. Input information can be stored and assigned to a certain input device. Input devices can multicast to various different output devices using a common signal configuration. Signals between an input device and an output device can be use a substitute signal configuration that is to enable implementation by the output device. Signals can be exchanged between over various transport media by encapsulating signals prior to transport, which can include encoding signals with additional security protocols.

## Description

### CROSS REFERENCE TO RELATED PATENTS/PATENT APPLICATIONS

### Provisional Priority Claim

The present U.S. Utility Patent Application claims priority pursuant to 35 U.S.C. § 119(e) to the following U.S. Provisional Patent Application which is hereby incorporated herein by reference in its entirety and made part of the present U.S. Utility Patent Application for all purposes:
1. U.S. Provisional Patent Application Serial No. 61/491,838, entitled "Media communications and signaling within wireless communication system," (Attorney Docket No. BP22744), filed 05-31-2011, pending.

### Incorporation by Reference

The following U.S. Utility Patent Applications are hereby incorporated herein by reference in their entirety and made part of the present U.S. Utility Patent Application for all purposes:
1. U.S. Provisional Patent Application Serial No. 61/491,838, entitled "Media communications and signaling within wireless communication system," (Attorney Docket No. BP22744), filed 05-31-2011, pending.

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

**1. Field of the Invention**

This invention relates generally to wireless media systems; and, more particularly, it relates to bridged control of media devices in a network via a user interface on a selected input device.

**2. Related Art**

Media environments often require several remote controls to carry out a desired media function, e.g., a first remote to turn on a TV and select a media input source, a second remote control to turn on and interact with a DVD player to initiate playback, and a third remote to interact with an AV receiver to control the audio presentation. To simplify control of multiple devices, CEC (Consumer Electronics Control) over HDMI (High-Definition Multimedia Interface) sets forth control signaling and procedures to help automate viewer interaction and minimize the number of remote control units needed. European SCART (Syndicat des Constructeurs d'Appareils Radiorécepteurs et Téléviseurs) standard offers similar functionality, such as enabling a remote control to send a "play" command directly to the DVD player. Upon receipt, the DVD player delivers control signaling that causes the AV receiver to power up, output further control signals to the TV, and produce AV output to speaker systems and the TV. The TV responds to such further control signals to power up, input the AV output, configure itself, and deliver the AV presentation.

In addition, to support control features, such as CEC, over a network link, current technology utilizes a method called "Pass-through", which relays all control messages coming from a media source and media sink over the network link. This method allows the control feature (which works on a direct connection) to seamlessly continue operation over a network, but it is not ideal for interoperability across devices from different vendors.

Furthermore, media source devices can gather display capability information from an attached media device. Based on such information, a media source device can produce a media output that falls within such capabilities. Such capability information is typically stored and exchanged in data structures defined by industry standard, including, but not limited to, EDID (Extended Display Identification). Such a system can be less than optimal when a media source device and a media sink device have different media distribution demands and underlying pathway limitations.

### Brief Summary of the Invention

According to an aspect, a device is provided, comprising:
memory; and
processing circuitry, the processing circuitry and the memory interoperable to:
   detect an input device and an output device,
   collect configuration/capability information from the input device and the output device,
   using the collected configuration/capability information of the input device and the output device, associate an input message to be received from the input device with an output message to be received by the output device,
      and
   in response to receiving the input message from the input device, generate the output message.

Advantageously, the processing circuitry and the memory interoperable to:
enable video streaming over a wireless network, where the input device is a wireless video source device, the output device is a wired video sink device, the input message is a video stream adapted to be transmitted by the wireless video source device, and the output message is a video stream adapted to be received by the wired video sink device.

Advantageously, the processing circuitry and the memory interoperable to:
detect a second output device;
collect configuration/capability information from the second output device;
in response to receiving a user command, disassociate the input message with the output message and associate the input message with a second output message to be received by the second output device; and
in response to receiving the input message, generate the second output message.

Advantageously, the input message from the input device is a command to access functionality of the output device via an interface on the input device.

Advantageously, the processing circuitry and the memory interoperable to:
detect an input device, a first output device, and a second output device, the input device having a first functionality and a second functionality, and the first output device and the second output device located in an automobile environment,
collect configuration/capability information from the input device,
using the collected configuration/capability information of the input device: associate the first functionality with the first output device to enable the first output device to access the first functionality, and
associate the second functionality with the second output device to enable the second output device to access the second functionality,
in response to receiving a first input signal from the input device, the first input signal associated with the first functionality, generate a first output signal to be received by the first output device, and
in response to receiving a second input signal from the input device, the second input signal associated with the second functionality, generate a second output signal to be received by the second output device.

Advantageously, the input device is associated with the output device based at least in part on previous associations of the input device.

Advantageously, the processing circuitry and the memory interoperable to:
decapsulate wired input messages received from the input device over a first wireless link, and
encapsulate wired output messages to be transmitted to the output device over a second wireless link.

Advantageously, the processing circuitry and the memory interoperable to:
in response to determining that an input message from the input device is of a first type, relay the input message to the output device; and
in response to determining that an input message from the input device is of a second type, process the input message to generate a processed output message, the processed output message is of the first type.

Advantageously, the first type is a generic message type and the second type is a vendor-specific message type.

Advantageously, the processing circuitry and the memory interoperable to:
collect input information from the input device, the input information identifying an input signal,
collect control information from the output device, the control information including a first command to control at least one aspect of the output device,
associate the input information with the control information, such that the input signal is associated with the first command, and
in response to receiving the input signal, generate the first command.

Advantageously, the processing circuitry and the memory further interoperable to:
associate the input information with the input device,
in response to receiving the input signal from the input device, generate the first command, and
in response to receiving the input signal from an alternate input device, generate a second command.

Advantageously, the input information is associated with the control information in response to receiving a second input signal.

Advantageously:
the input message is received over a first transport medium and the output message is transmitted over a second transport medium; and
the output message is generated by transcoding the input message.

Advantageously:
the input device is part of an input computer network;
the output device is part of an output computer network;
the device is part of a connectivity network, such that the input message is received using a first networking protocol and the output message is transmitted using a second networking protocol;
the encrypting includes encoding the output message using the second networking protocol.

According to an aspect, a method comprises:
detecting at least one input media device and at least one output media device, collecting configuration information from the at least one input media device and the at least one media output device,
using the collected configuration information of the at least one input media device and the at least one output media device, associating at least one input signal to be received from the at least one input media device with at least one output signal to be transmitted to the at least one output media device, and
in response to receiving the input signal from the at least one input media device, generating the output signal.

Advantageously, the method further comprises:
using the collected configuration information of the at least one input media
   device and the at least one output media device, identify a substitute signal configuration, the substitute signal configuration is readable by the at least one output media device; and
in response to determining the substitute signal configuration, transcode the input signal received from the at least one input media device to the substitute signal configuration, such that the output signal is a transcoded input signal.

Advantageously, the method further comprises:
detecting a plurality of output media devices;
collecting configuration information from the plurality of output media devices;
using the collected configuration information of the at least one input media device and the plurality of output media devices, identify a common signal configuration that is common to both the at least one input media device and each of the plurality of output media devices; and
in response to determining the common signal configuration, instruct the at least one input media device to restrict signals transmitted as part of a multicast to the plurality of output media devices to signals having the common signal configuration.

Advantageously:
the at least one input message is received over a first transport medium and the at least one output message is transmitted over a second transport medium; and
the at least one output message is generated by transcoding the at least one input message.

Advantageously, the transcoding including encrypting the at least one input message.

According to an aspect, a method comprises:
detecting at least one input device and at least one output device,
collecting input information from the at least one input device, the input information identifying an input signal,
collecting control information from the at least one output device, the control information including a control signal to control at least one aspect of the output device,
associating the input information with the control information, such that the input signal is associated with the control signal, and
in response to receiving the input signal, generating the control signal.

Advantageously, the method further comprises:
associating the input information with the at least one input device,
in response to receiving the input signal from the at least one input device, generating the control signal, and
in response to receiving an alternate input signal from an alternate input device, generating an alternate control signal, the alternate input signal similar to the input signal.

Advantageously, the input information is associated with the control information in response to a user input.

### BRIEF DESCRIPTION OF THE DRAWINGS

FIG. 1 and FIG. 2 are diagrams illustrating communication systems according to various embodiments of the disclosure;

FIG. 3 is a diagram illustrating a wireless communication system according to an embodiment of the disclosure;

FIG. 4 and FIG. 5 are diagrams illustrating adaptive transcoding of various input signals according to various embodiments of the disclosure;

FIG. 6 is a diagram illustrating a wireless communication system according to an embodiment of the disclosure;

FIG. 6A is a diagram illustrating a wireless communication system according to an embodiment of the disclosure;

FIG. 7 is a diagram illustrating a network bridging system according to an embodiment of the disclosure;

FIG. 8 is a diagram illustrating a wireless communication system according to an embodiment of the disclosure;

FIG. 9 is a diagram illustrating a signal bridging table according to an embodiment of the disclosure;

FIG. 10 is a diagram illustrating a control signal bridging table according to an embodiment of the disclosure;

FIG. 11 is a flow diagram according to an embodiment of the disclosure; and

FIG. 12 is a flow diagram according to an embodiment of the disclosure.

### DETAILED DESCRIPTION OF THE INVENTION

A novel system and architecture is presented herein by which control of one or more media devices in a media device network can be controlled by one or more selected input signals, messages, or the like from one or more media devices. A bridging element or infrastructure, referred to herein as a "bridge", collects configuration/capability information from input media devices ("input devices") and output media devices ("output devices") in a media device network and utilizes the collected information to associate input devices with output devices, associate input signals with output signals, so that one or more input devices can control, provide media content, to one or more output devices.

The bridge can be located in one or more input devices, output devices, or some other device in the media device network. For example, the bridge may be located in a "dashboard" device external to the other input devices and output devices in the media device network. The bridge can also be located in a separate network, including, but not limited to, a network layer domain. Configuration/capability information can include, but is not limited to, CEC (Consumer Electronics Control) codes, EDID (Extended Display Identification) information, power up/down codes, remote control codes, video capabilities, interface control support, gesture input information, and the like. Inputs and outputs can include, but are not limited to, media content, control signals, and the like.

As additional media devices enter or leave the media device network, the bridge, in some embodiments, utilizes the collected configuration/capability information to determine the optimal association of input devices and output devices in the media device network. For example, the bridge can respond to the addition or removal of one or more media devices from the media device network by transferring media content output to a different one or more output devices, transferring some or all input control to a different one or more input devices, or the like. The bridge may perform such functions according to internal logic, in response to a command from a user interface, or in accordance with some other protocol. For example, if a remote control device is assigned to control a Standard Definition television ("SDTV"), and a user initializes a High-Definition television ("HDTV") in the media device network, the bridge may, in response to a command from a user via a user interface, transfer broadcast output from the SDTV to the HDTV and transfer control of the broadcast from the remote control to a touchpad device, such as a smartphone, touchscreen device, or the like.

In some embodiments, the bridge associates input devices with output devices in response to manual commands delivered over a user interface. For example, in embodiments where the bridge is located in a device, the device may include a touchscreen interface, gesture input interface, or the like that enables a user to command the bridge to associate certain input controls from certain input devices to certain output controls to certain output devices. In some other embodiments, the bridge associates certain input devices with certain output devices based upon prior associations. For example, if a touchscreen device has been previously used to control an HDTV, then the bridge may respond to initialization of the HDTV by, without receiving any further command from the user, associate the touchscreen device with the HDTV such that the touchscreen device can control the HDTV.

The bridge can support a media device network that includes, but is not limited to, wired configurations, wireless configurations, a combination of wired and wireless configurations, and the like. The bridge can also support mapping Quality of Service (QoS), negotiation, and infrastructure for negotiation. In some other embodiments, the bridge supports connections between wired configuration devices across wireless links by "bridging" a wired link across the wireless link. For example, the bridge may support connections utilizing a wired standard including, but not limited to, CEC, EDID, or the like, across a link utilizing a wireless standard, including, but not limited to, WiFi, 3G, 4G, or the like.

Association of input devices with output devices can enable the bridge to determine whether to generate new particular signals in response to receiving other particular signals. For example, where a particular input device is associated with a particular output device, a bridge may respond to receiving a particular input signal from the input device by generating a particular output signal to be transmitted, by the bridge or another device, to the output device. Output signals can be control signals to control some aspect of the output device, input signals that are translated to be executable by the output device, some combination thereof, or the like.

The bridge, in some embodiments, utilizes security protocols to securely bridge connections between input devices and output devices. For example, where an input device is part of an network layer "input" domain, such as a Local Area Network (LAN) or Wireless LAN (WLAN), and an output device is part of an network layer "output" domain, the bridge may be part of a network layer connectivity domain which can bridge connections between the input device and the output device over a Wide Area Network (WAN) protocol, using one or more WAN security protocols. The bridge can, in some embodiments, use a UPnP (Universal Plug and Play) protocol for device discovery in the network layer input/output domains, XML (Extensible Markup Language)-based profiles for device properties, or some other combination of protocols. The bridge can utilize bridging connections over a WAN protocol to transcode and transport, with additional security protocols, media content between two media devices. For example, the bridge may transcode and transport television broadcasts from a TV, set-top box, or the like to a processing system including, but not limited to, a computer, a personal digital assistant, a touchpad device, a smartphone, or the like.

In some embodiments, one or more devices can utilize a bridge to advertise its individual configuration/capability to other devices. Such a process can operate as part of a host discovery system to identify IP addresses of hosts, service discovery system to identify hosts providing a certain one or more services, some combination thereof, or the like. For example, an output device, upon a trigger event including, without limitation, powering up, joining a network, or the like, can transmit configuration/capability information, any information indicating capabilities of the device, some combination thereof, or the like, to one or more other devices. Such information may be advertised to specific devices identified by the device advertising the configuration/capability information. The configuration/capability information can also be transmitted to any devices in a network, any device capable of receiving the transmission, some combination thereof, or the like. A device can, in some embodiments, determine the configuration/capability information of other devices by querying them, individually or as a group, for their individual configuration/capability information. In some embodiments, the configuration/capability information is transmitted to multiple devices via a multicast. Transmissions of configuration/capability information can be used to identify and utilize common programming interfaces, protocols, packet formats, and the like between two or more devices. For example, two or more devices communicatively coupled via a bridge can utilize Multicast DNS (mDNS), some other suitable protocol, or the like. In some embodiments, transmissions of queries, advertisements, and the like of configuration/capability information between devices can be connected by a bridge, which can, in some embodiments, relay, process, transcode, or interact in some manner with transmissions relating to configuration/capability information of devices.

In some embodiments, a bridge can associate one or more input devices with one or more output devices based at least in part upon the latency of the connections between the devices, the latencies that the devices can individually tolerate, some combination thereof, or the like. For example, input devices that desire low-latency connections, such as video source devices, may be associated with suitable output devices over low-latency connections. In addition, input devices that can tolerate higher-latency connections may be associated with suitable output devices over higher-latency connections. In some embodiments, a bridge facilitates bounded latency via control of a time domain of interaction between devices. For example, a bridge can associate one or more input devices with one or more output devices over one or more connections such that the workload over the connections is balanced to ensure that data arrives at a receiving device within a "bounded" amount of time.

In some embodiments, the bridge enables a user to access and utilize at one least functionality of the output device from an interface on at least one input device. For example, in an embodiment where the bridge is located in an automobile, and the automobile includes a user interface, such as a touch pad or touch screen, gesture input interface, or the like, the bridge can bridge a connection between the automobile's user interface and a processing device, so that the user can access and utilize applications on the processing device via the automobile's user interface. Where the processing device is a smartphone that features a Global Positioning System (GPS)-based navigation application, the user may access and user the smartphone's GPS application by interacting with the automobile's user interface. The bridge may bridge a connection between the processing device and the user interface automatically, upon receiving a user command to bridge a connection, upon the processing device being "docked" in a portal or dock in the automobile, or the like. In some embodiments, the "docking" is virtual, such that the processing device is communicatively linked with the bridge, some other device, or the like. In some embodiments, specific elements of functionality of a device can be bridged to be accessed by one or more certain input devices. For example, where an input device is a smartphone in an automobile that is virtually "docked" with a bridge located in the car, the bridge may link an application on the smartphone, including, without limitation, a GPS application, to a user interface, including, without limitation, a touchscreen interface on the automobile's dashboard. In addition, the bridge may link a video source functional element of the smartphone, including, without limitation, access to a video streaming service over a network, to a video player device located in the backseat area of the automobile. The bridge can be located in a device located in the automobile, in a user device, or the like.

In some embodiments, the bridge relays a selected group of signals between two or more media devices in a media device network while processing other signals locally before passing them on. Processing can include, but is not limited to, translation of the signals. For example, different HDMI device vendors may use different CEC command groups to support the same or similar functionality, such as <User Ctrl> and <Deck Ctrl> are both used by some vendors to support playback control. The bridge can, in some embodiments, implement a logic to probe and maintain, in its internal implementation, the "CEC capability set" of HDMI devices connected to the system, in order to determine when and how to translate the incoming CEC message before relaying it to receiving devices. For example, where two or more media devices from two different vendors are connected in a media device network, the bridge may relay CEC signals that are generic and do not require translation to be understood by the receiving devices. However, the bridge may translate CEC signals that are vendor specific or otherwise non-generic, such that the CEC signal can be understood by the receiving device. Signals can be translated to be vendor-specific to, generic, or some other signal configuration. This functionality improves interoperability across devices from different vendors and extends functionality of control mechanisms, including, but not limited to, CEC functionality, over a media device network.

In some embodiments, the bridge enables media source devices to provide media content that is acceptable to one or more different media devices. For example, where a media source device is to perform a multicast to multiple media sink devices, the bridge can determine a common signal configuration that is acceptable to all of the multicast sink devices and then implement functionality to ensure that the common signal configuration is utilized. Implementation can include, but is not limited to, instructing the media source device to restrict multicast signals, such as CEC controls, to a common signal configuration, transcoding signals received from the media source device to the common signal configuration, or the like.

In some other embodiments, the bridge can collect configuration/capability information from the media source device and media sink devices and use the collected configuration/capability information to determine how to "fool" the media source device, one or more media sink devices, or some combination thereof, to provide acceptable signal configurations. For example, rather than forwarding configuration/capability information that would not enable the media source device to provide an acceptable signal configuration to one or more media sink devices, the bridge may construct substitute or alternative data structures to forward to the media source device, thereby "fooling" the media source device into providing an acceptable media device configuration. The bridge may also construct substitute data structures to forward to the media sink devices, or some other device, to enable acceptable output within pathway constraints.

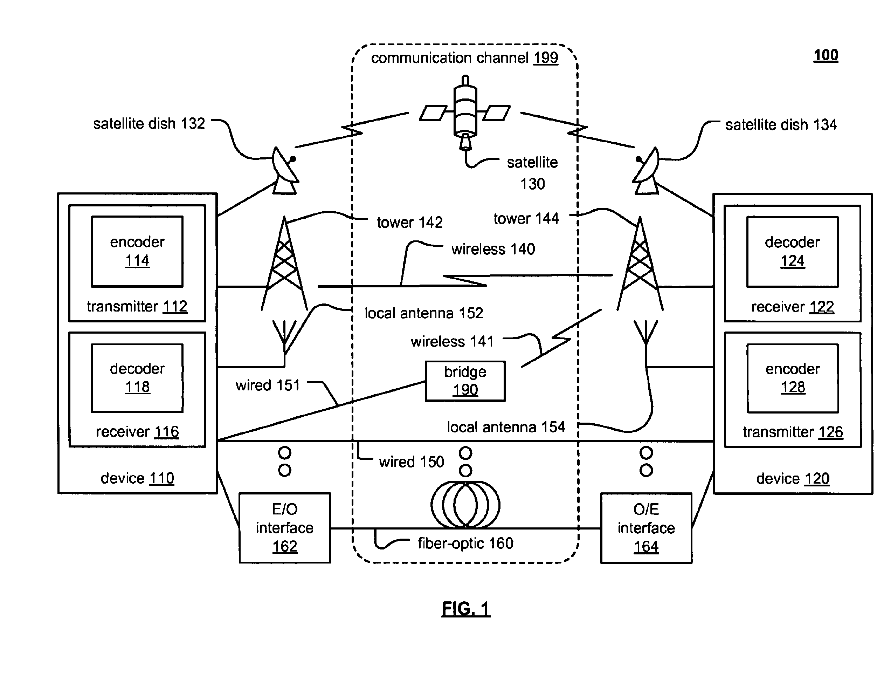

Referring to FIG. 1, this embodiment of a communication system 100 includes a communication channel 199 that communicatively couples a communication device 110 (including a transmitter 112 having an encoder 114 and including a receiver 116 having a decoder 118) situated at one end of the communication channel 199, to another communication device 120 (including a transmitter 126 having an encoder 128 and including a receiver 122 having a decoder 124) at the other end of the communication channel 199 There are several different types of media by which the communication channel 199 may be implemented (e.g., a satellite communication channel 130 using satellite dishes 132 and 134, a wireless communication channel 140 using towers 142 and 144 and/or local antennae 152 and 154, a wired communication channel 150, and/or a fiber-optic communication channel 160 using electrical to optical (E/O) interface 162 and optical to electrical (O/E) interface 164)). In addition, more than one type of media may be implemented and interfaced together thereby forming the communication channel 199.

To reduce transmission errors that may undesirably be incurred within a communication system, error correction and channel coding schemes are often employed. Generally, these error correction and channel coding schemes involve the use of an encoder at the transmitter end of the communication channel 199 and a decoder at the receiver end of the communication channel 199.

Any of various types of ECC codes described can be employed within any such desired communication system (e.g., including those variations described with respect to FIG. 1), any information storage device (e.g., hard disk drives (HDDs), network information storage devices and/or servers, etc.) or any application in which information encoding and/or decoding is desired.

Generally speaking, when considering a communication system in which video data is communicated from one location, or subsystem, to another, video data encoding may generally be viewed as being performed at a transmitting end of the communication channel 199, and video data decoding may generally be viewed as being performed at a receiving end of the communication channel 199.

Also, while the embodiment of this diagram shows bi-directional communication being capable between the communication devices 110 and 120, it is of course noted that, in some embodiments, the communication device 110 may include only video data encoding capability, and the communication device 120 may include only video data decoding capability, or vice versa (e.g., in a uni-directional communication embodiment such as in accordance with a video broadcast embodiment).

In some embodiments, two communication devices 110 and 120 may be communicatively coupled across a communication channel 199 via a bridging element 190 ("bridge"), which can utilize various transport media, links, and the like to couple communication devices. For example, in the illustrated embodiment, bridge 199 can bridge a link between communication devices 110 and 120 by being communicatively coupled to communication device 110 via a wired link 151 and by being communicatively coupled to communication device 120 via a wireless link 141. In some embodiments, the bridge 199 transcodes signals received over one link in order to ensure that the signal, or a substitute signal, can be received and interpreted by the destination device. For example, bridge 199 can receive a CEC command from communication device 110 via aired link 151, transcode and encapsulate the command for transport across a wireless link, and transmit the transcoded signal to communication device 120 via wireless link 151. Bridge 199 can also respond to receiving a CEC command from communication device 110 by generating a substitute signal to be transmitted to communication device 120.

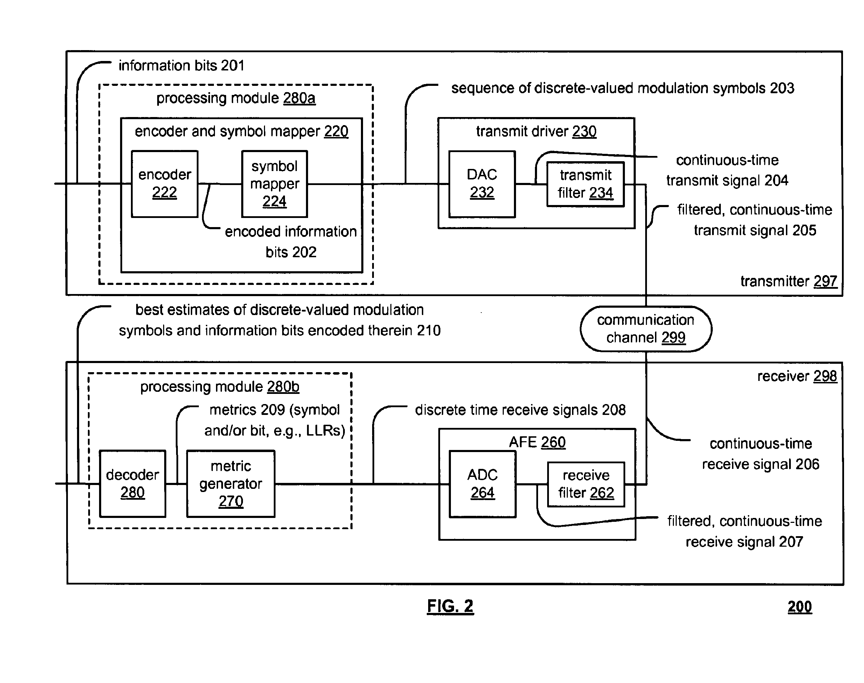

Referring to the communication system 200 of FIG. 2, at a transmitting end of a communication channel 299, information bits 201 (e.g., corresponding particularly to video data in one embodiment) are provided to a transmitter 297 that is operable to perform encoding of these information bits 201 using an encoder and symbol mapper 220 (which may be viewed as being distinct functional blocks 222 and 224, respectively) thereby generating a sequence of discrete-valued modulation symbols 203 that is provided to a transmit driver 230 that uses a DAC (Digital to Analog Converter) 232 to generate a continuous-time transmit signal 204 and a transmit filter 234 to generate a filtered, continuous-time transmit signal 205 that substantially comports with the communication channel 299. At a receiving end of the communication channel 299, continuous-time receive signal 206 is provided to an AFE (Analog Front End) 260 that includes a receive filter 262 (that generates a filtered, continuous-time receive signal 207) and an ADC (Analog to Digital Converter) 264 (that generates discrete-time receive signals 208). A metric generator 270 calculates metrics 209 (e.g., on either a symbol and/or bit basis) that are employed by a decoder 280 to make best estimates of the discrete-valued modulation symbols and information bits encoded therein 210.

Within each of the transmitter 297 and the receiver 298, any desired integration of various components, blocks, functional blocks, circuitries, etc. therein may be implemented. For example, Fig. 2 shows a processing module 280a as including the encoder and symbol mapper 220 and all associated, corresponding components therein, and a processing module 280 is shown as including the metric generator 270 and the decoder 280 and all associated, corresponding components therein. Such processing modules 280a and 280b may be respective integrated circuits. Of course, other boundaries and groupings may alternatively be performed without departing from the scope and spirit of the invention. For example, all components within the transmitter 297 may be included within a first processing module or integrated circuit, and all components within the receiver 298 may be included within a second processing module or integrated circuit. Alternatively, any other combination of components within each of the transmitter 297 and the receiver 298 may be made in other embodiments.

As with the previous embodiment, such a communication system 200 may be employed for the communication of video data is communicated from one location, or subsystem, to another (e.g., from transmitter 297 to the receiver 298 via the communication channel 299). Additionally, as with the previous embodiment, such a communication system may be employed to communicatively couple transmitter 297 and receiver 298 across a communication channel 299 that utilizes a bridge 190, illustrated above in FIG. 1. For example, where signal 205 is incompatible with signal 206, communication channel 299 may include a bridge 190 that transcodes signal 205 into signal 206.

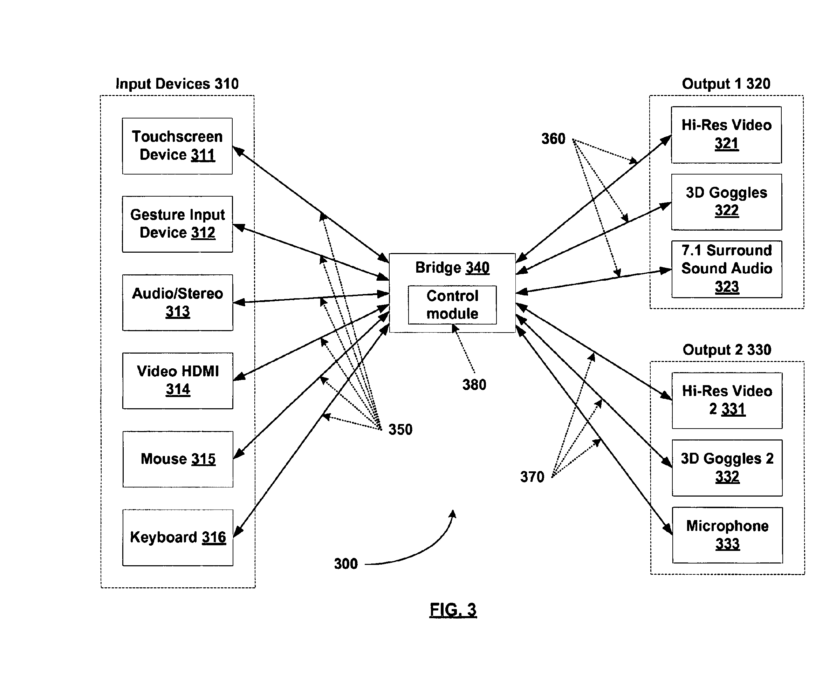

FIG. 3 is a diagram illustrating an embodiment of a network 300 that includes input devices 310 linked to a first set of output devices 320 and a second set of output devices 330 across a combination of network links 350, 360, and 370, which are bridged by bridge 340.

As shown, input devices 310 can include, but are not limited to, a touchscreen device (e.g., a touchpad, a pad device, an iPad, iPhone, or the like) 311, a gesture input device 312, an Audio/Stereo device 313, a Video HDMI device 314, a mouse 315 a keyboard 316, and the like. Output devices can include, but are not limited to, a High-Res video device 321, 3D goggles 322, a 7.1 Surround Sound Audio device 323, a microphone 333, and the like. Devices that are illustrated as input devices 310 may, in some other embodiments, be output devices 320 and 330, and devices illustrated as output devices 320 and 330 may, in some other embodiments, be input devices 310.

Network links 350, 360, and 370 can include, but are not limited to, one or more various transport media. For example, network link 350 may be an HDMI wired link, network link 360 may be a 4G wireless link, and network link 370 may be a Bluetooth wireless link. Other transport media may be considered to be encompassed by this disclosure, including, but not limited to, cellular, 3G wireless, IR (infrared) receivers, LTE (3GPP Long Term Evolution), Ethernet/LAN, and DCL (Data Control Language), and the like.

In some embodiments, bridge 340 bridges links between one or more input devices 310 and one or more output devices 320 and 330 by transcoding signals received from one media device to be transported successfully to its linked media device. For example, in an embodiment where signals received over network link 350 are CEC commands over a wired HDMI link, and signals transmitted over network link 360 are WiFi signals, bridge 340 may process CEC signals received over network link 350 to be transported over network link 360; such processing can include, but is not limited to, transcoding the signal, encapsulating the signal for wireless transport, translating the signal, and the like.

In some embodiments, bridge 340 includes functionality that enables bridge 340 to function at least in part as a control device. For example, as shown in the illustrated embodiment, bridge 340 can include a control module 380 which can send control signals to one or more output devices 320 and 330. Control module 380 can be remotely programmed to match certain input signals from one or more input devices 310 with output control signals. Such matching programming can be determined by a control data stream, control input from a user, control input from a device, some combination thereof, or the like.

In some embodiments, bridge 340 bridges control of one or more of output devices 320 and 330 by input devices 310 by, in response to receiving a certain one or more input signals from one or more input devices 310, generating one or more output signals to be transmitted to one or more of output devices 320 and 330. Output signals can be control signals to control some aspect of an output device, media content, or the like. Bridge 340 may perform such generation of certain output signals in response to receiving certain input signals in response to some internal logic, a user command to associate a certain input device, input signal, or the like with a certain output device, output signal, or the like. The user command can be an input signal received from a user interface linked to the bridge 340, which can be a numerical code, selection of an icon on a visual interface, a gesture input signal, or the like.

In some embodiments, bridge 340 can alter the associations of input devices and output devices in the media device network 300. For example, where touchscreen device 311 is associated with Hi-Res Video 321 so that input signals sent from touchscreen device 311 to bridge 340 will result in control signals being generated by bridge 340 and transmitted to Hi-Res Video 321, the bridge can respond to a user command to associate touchscreen device 311 with Hi-Res Video 2 331, so that input signals sent from touchscreen device 311 to bridge 340 will result in control signals being generated by bridge 340 and transmitted to Hi-Res Video 2 331.

In some other embodiments, bridge 340 may associate input devices with output devices automatically, without receiving any further user commands. For example, if Touch Device 312 has historically been used to control Hi-Res Video 2 331, and media content output has historically been switch from Hi-Res Video 321 to Hi-Res Video 2 331 whenever Hi-Res Video 331 is turned on, then bridge 340 can, in response to detecting that Hi-Res Video 2 is turned on, switch media content output from Hi-Res Video 321 to Hi-Res Video 331 and associate Touch Device 312 with Hi-Res Video 2 so that input signals from Touch Device 312 will result in control signals for Hi-Res Video 2 331 being generated by bridge 340.

In some embodiments, bridge 340 may relay signals between a media source device and a media sink device. For example, in the illustrated embodiment, bridge 340 may relay signals from Video HDMI 314 to Hi-Res Video 321. Where the signals from a transmitting device are interpretable by a receiving device, the bridge 340 may simply pass the signal through, and encapsulate as necessary to be transported across a transport medium. Where the signals from transmitting device are not executable by a receiving device, the bridge 340 may process the signal, which can include translating the signal, transcoding the signal, or the like, such that the processed signal can be interpreted by the receiving device. In some embodiments, network 300 features multiple bridges 340. For example, multiple bridges may be linked in a "cascade". Such a cascading of bridges 340 can be used to enable cascading of output to multiple devices. For example, in a home network 300 that includes multiple surround sound audio devices 323 and a television, one bridge 340 can enable a touchscreen device 311, some other device, or the like, to control output from the television, while one or more bridges 340 can be cascaded to provide audio output from the television to the one or more surround sound audio devices 323 in the network 300.

In some embodiments, bridge 340 can enable remote desktop applications between two devices. For example, where Output 1 320 is a desktop workstation, a mobile touchscreen device 311 can be connected to the desktop workstation to enable a user to interact with the functionality of the desktop workstation on the touchscreen device 31 via remote desktop functionality. Bridge 340 can enable remote desktop functionality for highly mobile devices over one or more wireless networks 350 and 360. For example, where Output 1 320 is a desktop computer wired via connection 360 to bridge 340, and touchscreen device 311 communicates with bridge 340 via a wireless connection 350, a user of touchscreen device 311 can interact with functionality of Output 1, even while mobile in the same structure as Output 1, a different structure, a different location, or the like.

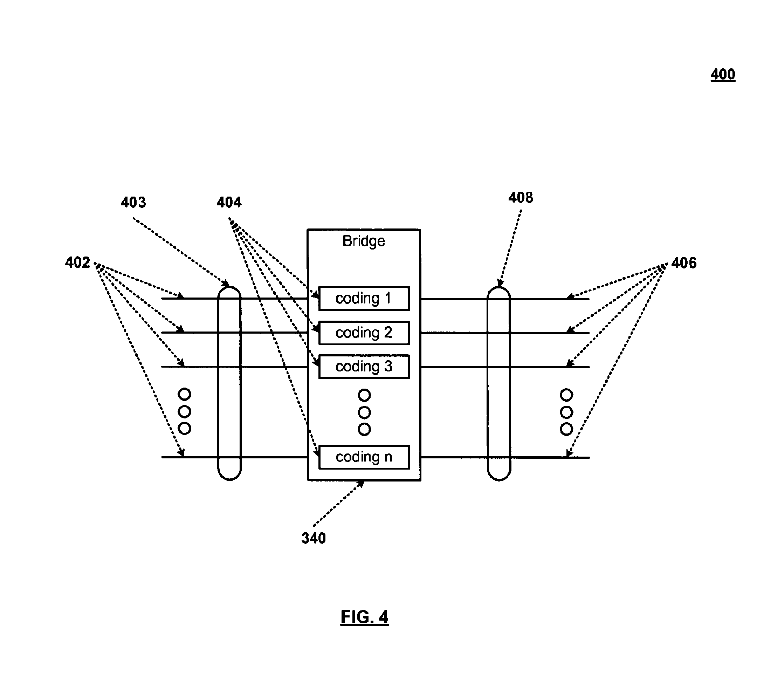

Referring to the embodiment 400 of FIG. 4, multiple respective input signals 402 are received by bridge 340. These respective input signals 402 may be received separately or combined in some manner (e.g., partially combined such that only certain of the input signals 402 are included in one or more groups, fully combined, etc.). Also, it is noted that the respective input signals 402 need not necessarily be received synchronously. That is to say, a first respective input signal 402 may be received 403 at or during a first time, a second respective input signal 402 may be received at or during a second time, etc.

The bridge 340, in some embodiments, is operative to employ any one of a number of respective codings 404 to the respective input signals 402 received 403 thereby. That is to say, the bridge 340 is operative selectively to encode each respective input signal 402. For example, any of a number of tools may be employed for selectively encoding 408 a given input signal 402, including, but not limited to, a manual command received via a user interface, internal logic, or the like. The bridge may select any combination of such respective tools for encoding 408 a given input signal 402. The encoded/transcoded output signals 406 may be output from the bridge 340 in an unbundled or decoupled format for independent wireless transmission to one or more other devices.

Any of a number of encoding selection parameters may drive the selective combination of one or more respective tools as may be employed for encoding 408 a given signal. For example, some encoding selection parameters may include signal type, the content of the signal, one or more characteristics of a wireless communication channel by which the encoded/transcoded signals 406 may be transmitted, the proximity of the bridge 340 or a device including the bridge 340 to one or more other devices to which the encoded/transcoded signals 406 may be transmitted, the relative or absolute priority of one or more of the encoded/transcoded signals 406, sink characteristics channel allocation of one or more wireless communication channels, quality of service, characteristics associated with one or more intended recipients to which the encoded/transcoded signals 406 may be transmitted, etc.).

As can be seen with respect to this diagram, a single bridge 340 includes selectivity by which different respective signals 402 may be encoded/transcoded 408 for generating different respective encoded/transcoded signals 406 that may be independently transmitted to one or more output devices for consumption by one or more users.

In some embodiments, one or more codings in bridge 340 are one or more encoders operating cooperatively or in a coordinated manner such that different respective signals 402 may be selectively provided to one or more of the encoders. As the reader will understand, such an embodiment can include separate and distinctly implemented encoders that are cooperatively operative to effectuate the selective encoding/transcoding 408 of signals 402 as compared to a single bridge 340 that is operative to perform encoding/transcoding 408 based upon one or more codings 404. In accordance with one implementation of the architecture of this particular diagram, each respective encoder 504 in the bridge 340 may correspond to a respective coding.

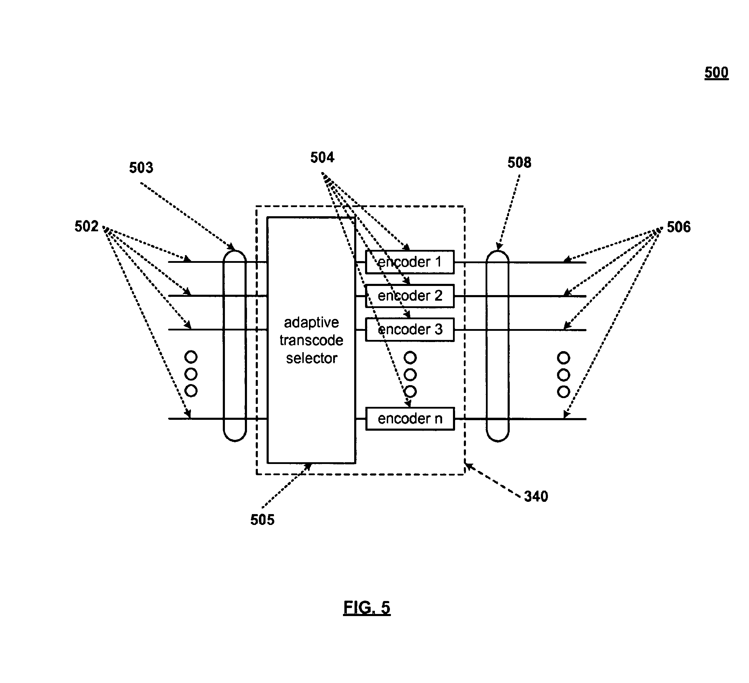

Referring to the embodiment 500 of FIG. 5, this diagram depicts yet another embodiment 500 that is operable to effectuate selectivity by which different received 503 respective signals 502 may be encoded/transcoded 508 for generating different respective encoded/transcoded signals 506 that may be independently transmitted to one or more output devices for consumption by one or more users.

As can be seen with respect to this embodiment, bridge 340 includes an adaptive transcode selector 505 that is operative to provide respective 502 to one or more encoders 504. In accordance with one implementation of the architecture of this particular diagram, each respective encoder 504 in the bridge 340 may correspond to a respective coding. The adaptive transcode selector 505 is the circuitry, module, etc. that is operative to perform the selective providing of the respective signals 502 to one or more encoders 504.

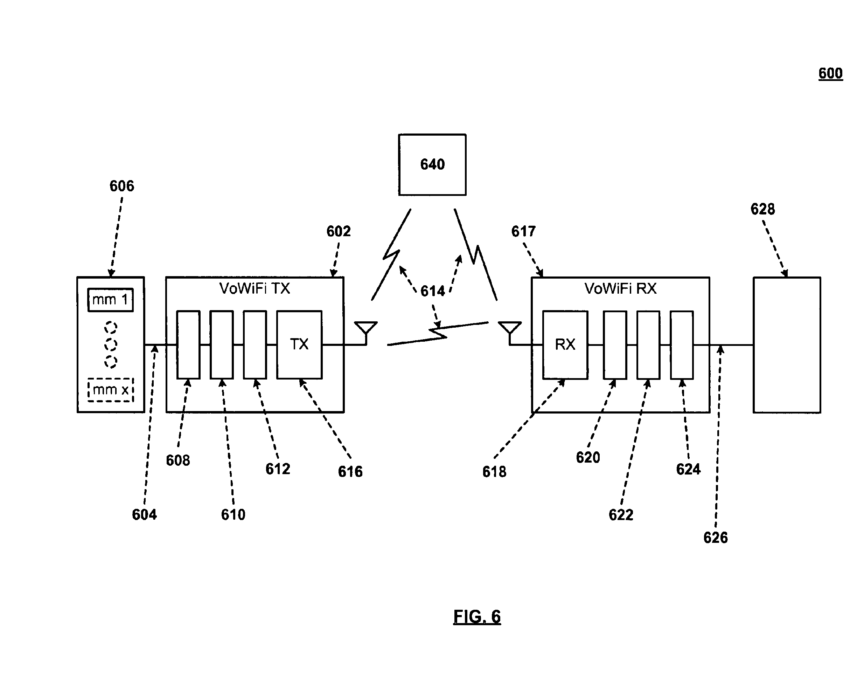

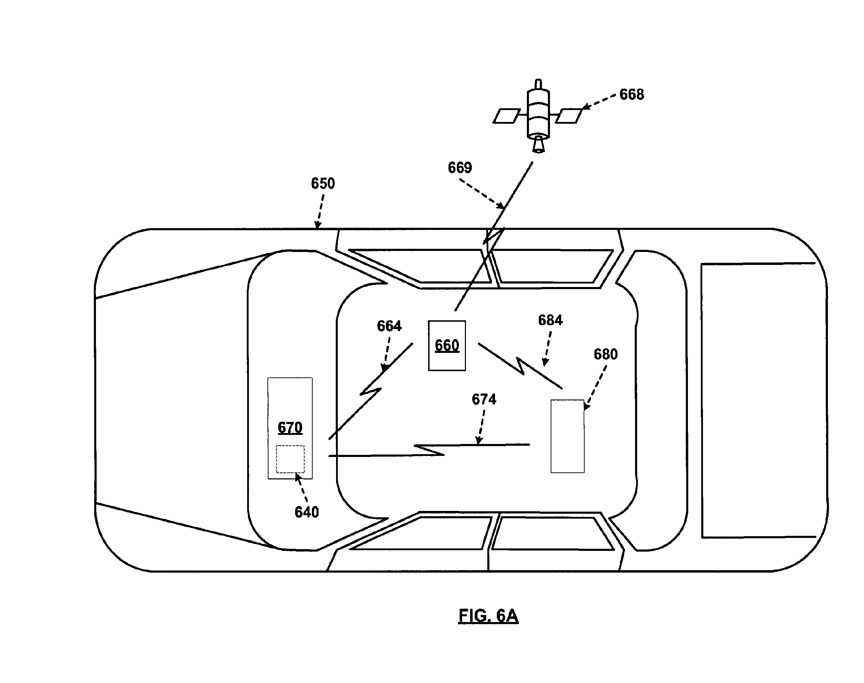

FIG. 6 is a diagram illustrating an embodiment 600 of a wireless communication system. The wireless communication system of this diagram illustrates how different respective signals may be bridged between one or more input devices 606 to one or more output devices 628 (e.g., examples of such devices include, but are not limited to, STBs, Blu-Ray players, PCs {personal computers}, etc.). A video over wireless local area network/Wi-Fi transmitter (VoWiFi TX) 602 is operative to receive one or more signals 604 from one or more input devices 606. These one or more signals 604 may be provided in accordance with any of a variety of communication standards, protocols, and/or recommended practices. In one embodiment, one or more signals 604 are provided in accordance with High Definition Multi-media Interface^{™} (HDMI) and/or YUV (such as HDMI/YUV). As the reader will understand, the YUV model defines a color space in terms of one luma (Y) [e.g., brightness] and two chrominance (UV) [e.g., color] components.

The VoWiFi TX 602 includes respective circuitries and/or functional blocks therein. For example, an HDMI capture receiver initially receives the one or more signals 604 and performs appropriate receive processing 608 thereof. An encoder 610 then is operative selectively to encode different respective signals in accordance with the in accordance with various aspects, and their equivalents, of the invention. A packetizer 612 is implemented to packetize the respective encoded/transcoded signals 614 for subsequent transmission to one or more output devices 616, using the transmitter (TX) 616 within the VoWiFi TX 602.

Independent and unbundled encoded/transcoded signals 614 may be transmitted to one or more output devices 617 via one or more wireless communication channels. Within this diagram, one such output device 617 is depicted therein, namely, a video over wireless local area network/Wi-Fi receiver (VoWiFi RX) 617. Generally speaking, the VoWiFi RX 616 is operative to perform the complementary processing that has been performed within the VoWiFi TX 602. That is to say, the VoWiFi RX 617 includes respective circuitries and/or functional blocks that are complementary to the respective circuitries and/or functional blocks within the VoWiFi TX 602. For example, a receiver (RX) 618 therein is operative to perform appropriate receive processing of one or more signals 614 received thereby. A de-packetizer 620 is operative to construct a signal sequence from a number of packets. Thereafter, a decoder 622 is operative to perform the complementary processing to that which was performed by the encoder within the VoWiFi TX 602. The output from the decoder is provided to a render/HDMI transmitter (TX) 624 to generate at least one encoded/transcoded signal 626 that may be output via one or more output devices 628 for consumption by one or more users.

In some embodiments, a bridge 640 may include both an input device 602 and an output device 617, such that the bridge 340 can receive and process transcoded signals transmitted 614 over a first network and re-process and transcode the signals for transmission 614 over another network. For example, the bridge 640 can, in some embodiments, receive wired signals 604 in the form of transcoded wireless signals 614, process the signals using respective circuitries 620, 622, 624, 608, 610, and 612, and transmit the re-transcoded signal 614 to an output device 617 to be processed back into a wired signal 626. The bridge 640 can, in some embodiments, enable an input device 606 to stream a video stream over a wireless network (VoWiFi) to a video output device 628 that normally receives input via a wired connection. For example, a video stream received at a touchscreen input device from a network can be transcoded into a wireless signal that is transmitted 614 from VoWiFI TX 602, with or without a bridge 640, to a VoWiFi RX 617, to be transcoded to a wired HDMI signal 626 to be displayed on an HDMI television output device 628.

FIG. 6A is a diagram illustrating a wireless communication system located in an automobile environment 650, which can include, without limitation, an automobile, a region in proximity to an automobile, some combination thereof, and the like. In some embodiments, bridge 640 can enable selected functional elements, functionality, or the like associated with one or more personal devices 660 to be accessed by one or more devices located in a particular area, including, without limitation, an automobile environment 650. Bridge 640 can be located in one or more devices located in the automobile environment 650, in the personal device 660, or in some other location within or without the automobile environment 650. In some embodiments, personal device 660 is "docked", physically, virtually over a communication link 664, some combination thereof, or the like, to enable one or more functional elements to be accessed by a device 670 located in automobile environment 650, presented through a device 680 in automobile environment 650, some combination thereof, or the like. For example, where personal device 660 is a smartphone with functionality that includes, without limitation, a GPS application that determines the location of the personal device 660 via a link 669 with a GPS satellite network 668, bridge 640 can enable a passenger in automobile environment 650 to access the GPS application on personal device 660 through a user interface located in device 670, which can be located in the automobile environment's 650 dashboard. In some embodiments, bridge 640 can enable bidirectional communication between devices in automobile environment 650, such that a device 670, 680, or the like can, with or without bridge 640, interact with functionality of personal device 660, vice versa, some combination thereof, and the like.

Communication between devices in automobile environment 650 can be facilitated by a wireless network, a wired network, one or more physical connections, some combination thereof, or the like. Access to functional elements of personal device 660 through an interface in device 670 can be set up and managed through personal device 660, bridge 640, device 670, another device 680 in the automobile environment 650, user input to any of the devices, internal logic of any of the devices, some combination thereof, or the like. For example, a user of personal device 660, upon entering the automobile environment 650, may manually command personal device 660 to virtually "dock" with bridge 640 and enable access to the GPS application on personal device 660 from a user interface on device 670, any particular device in automobile environment 650, some combination thereof, or the like. The virtual "docking" process may occur without a user command and based upon internal logic of one or more devices, predetermined parameters of one or more devices, some combination thereof, or the like.

In some embodiments, bridge 640 can enable personal device 660 to serve as a media source device by establishing a connection between personal device 660 and one or more devices 680 located in automobile environment 650. For example, where personal device 660 can receive streaming video from a network, a memory located in personal device 660, some combination thereof, or the like, bridge 640 can receive the streaming video in a transmission 664 from personal device 660 and transmit the streaming video 674 to be played on device 680, which can include, without limitation, a media player located in the backseat area of automobile environment 650, or the like. In some embodiments, transmissions between personal device 660 and device 680 can be direct transmissions 684. For example, bridge 640 can be located in personal device 660 and can direct certain transmissions 664 of certain content to certain devices 670 and other certain transmissions 684 of other certain content to other certain devices 680. In addition, a bridge 640 located in a device 670 in the automobile environment 650 may assign certain functional elements of personal device 660 to be transmitted 664 to one device directly, transmitted indirectly 664 and 674 to device 680 via a bridged connection, transmitted directly 684 to device 680, some combination thereof, or the like. In some embodiments, bridge 640 can bridge multiple various functional elements of one or more various devices 660 to one or more various other devices 670 and 680. Such assignment of certain functional elements to be accessed, presented, or the like by certain automobile environment devices may be determined by input from a user of personal device 660 or a passenger in automobile environment 650, internal logic of one or more devices, some combination thereof, or the like.

In some embodiments, bridge 640 functions to bridge connections between devices at the physical data stream layer via logical layer integration. The bridge 640 can, in some embodiments, perform integration at the application programming interface (API) layer, physical data stream layer, some combination thereof, or the like. For example, a manufacturer of an automobile may desire that any functionality of personal device 600 accessed through an interface on device 670 be presented using the manufacturer's graphical user interface (GUI), rather than the GUI used by the personal device 660. Where a personal device 600 has a GPS application, a manufacturer may desire that the GPS application, when accessed via a connection 664 with device 670, can be displayed on device 670 with the appropriate GUI for a manufacturer-utilized GPS application, even though the functionality accessed via device 670 is the GPS application of personal device 660.

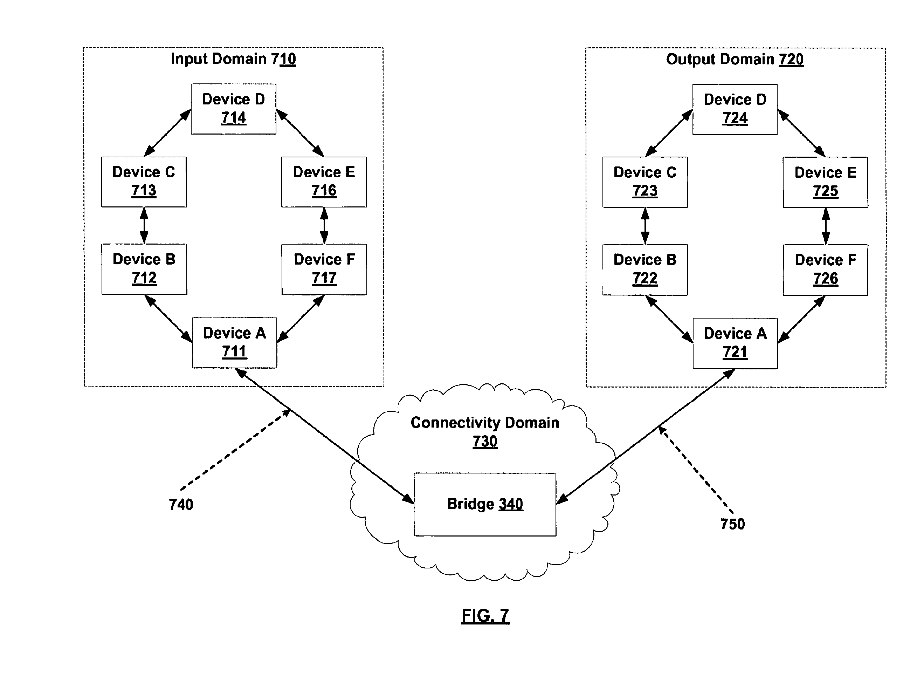

FIG. 7 is a diagram illustrating a bridged link between two computer networks 710 and 720 via a connecting network 730. In some embodiments, the input domain 710 and the output domain are various layer domains. For example, input domain 710 and output domain 720 may be network layer domains. Each of the input and output domains 710 and 720 may be various types of networks. For example, input domain 710 may be a network layer LAN domain, containing Devices A-F 711-717 and output domain may be a network layer WLAN domain containing Devices A-F 721-726. A link between the input domain 710 and the output domain 720 can be bridged by a connectivity domain 730. In some embodiments, the connectivity domain 730 is a different type of domain than the input domain 710 and the output domain 720. For example, connectivity domain 730 may be a network layer WAN domain. Bridge 340 may be part of the connectivity domain 730 and may be located in a processing module, server, or the like. Bridge 340 can, in some embodiments, bridge a link between the input domain 710 and the output domain 720 across one or more transport media 740 and 750. The transport media may be the same type, different types, or the like.

In some embodiments, bridge 340 can transcode signals transported between input domain 710 and output domain 720 with additional security protocols to ensure a secure link between the domains. For example, where input domain 710 and output domain 720 are both LAN domains, and connectivity domain 730 is a WAN domain, bridge 340 can transport signals between the input domain 710 and the output domain 720 via a WAN protocol link 740 and 750, such that signals transported via the bridged link 740 and 750 are transcoded, encoded, encrypted, or the like, with one or more various WAN security protocols, including, but not limited to, UPnP protocols, XML-based profiles, and the like.

In some embodiments, a bridge enables secure communications between two devices by decrypting input signals that use a first security protocol and encrypting output signals using a similar or different security protocol. For example, a bridge 340 can bridge a connection between two devices that have different security domains by serving as proxy for one or more devices. Signals received from one device that has a first security domain can be decrypted and re-encrypted to meet the security domain of the receiving device, transcoded, translated, some combination thereof, or the like. In some embodiments, the bridge can enable connections between two or more digital rights management (DRM)-aware devices to enable streaming of DRM content under a DRM scheme.

In various embodiments described herein, protected content to be delivered under a DRM scheme is received at a wireless communication device. The wireless communication device receives information allowing a DRM key associated with the media sink to be determined. The DRM key can then be used to generate DRM modified wireless encryption keys, which in turn can be used to encode the protected content for transmission over a wireless link. The DRM modified keys can be used, for example to seed a Wi-Fi Protected Access (WPA) encryption engine in place of other keys normally used in the wireless transmission process.

In some embodiments, configuration/capability information received by a bridge 340 includes DRM keys, related information, and the like that enables bridge 340 to identify encryptions that should be applied to content to be transmitted to a certain output device. For example, a bridge 340 can receive encrypted content from Device A 711 over a certain security domain 740. The encrypted content can be decrypted, and information associated with the content can be compared to DRM keys associated with devices in output domain 720. Upon identifying the DRM key associated with Device A 721, such as a media sink device with permission to play the DRM content, the content can be encrypted by the bridge 340, using the DRM scheme, for secure transmission to Device A 721 using a certain security domain 750.

As used herein, the term "digital rights management" (DRM) is intended to be interpreted to encompass various content protection schemes, standards, protocols, and processes by which various types of data are protected from unauthorized copying and access. Among the content protection schemes encompassed by the term DRM, are the High-bandwidth Digital Content Protection (HDCP) standard, and other similar standards that employ key-exchange or similar procedures to protect sensitive data, even though such standards may not be part of DRM standard in the strictest sense.

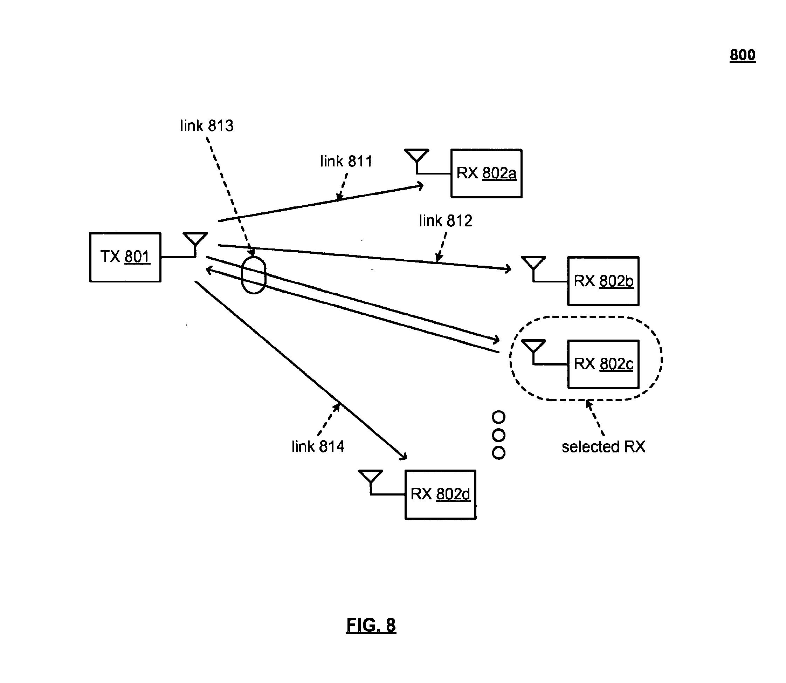

FIG. 8 is a diagram illustrating an embodiment 800 of supporting communications from a transmitter wireless communication device to a number of receiver wireless communication devices based on bi-directional communications (e.g., management, adaptation, control, acknowledgements (ACKs), etc.) with a selected one of the receiver wireless communication devices. In some embodiments, the illustrated embodiment 800 of supporting communications can be utilized by a bridge 340, illustrated above in FIG. 3, to communicate with various media devices in a media device network to acquire configuration/capability information, or the like. With respect to this diagram, it can be seen that communications between a transmitter wireless communication device 801 and non-selected receiver wireless communication devices 802a, 802b, and 802d are all effectuated in a unidirectional manner via links 811, 812, and 814. However, communications between transmitter wireless communication device 801 and receiver wireless communication device 802c (e.g., a selected receiver wireless communication device) are effectuated in a bidirectional manner via link 813. For example, any of a number of communications from receiver wireless to communication device 802c may be provided to the transmitter wireless communication device 801 via link 813. Some examples of such upstream communications may include feedback, acknowledgments, channel estimation information, channel characterization information, and/or any other types of communications that may be provided for assistance, at least in part, for the transmitter wireless communication device 801 to determine and/or select one or more operational parameters by which communications are effectuated there from to the receiver wireless communication devices 802a-802b.

As may be understood with respect to the diagram, the unidirectional communications with the non-selected receiver wireless communication devices 802a-802d are based upon one or more operational parameters associated with the selected receiver wireless communication device 802c. Within this embodiment and also within various other embodiments included herein, it may be seen that communications from a given transmitter wireless communication device are effectuated in accordance with adaptation and control that is based upon one particular and selected communication link within the wireless communication system. The other respective wireless communication links within the wireless communication system do not specifically govern the one or more operational parameters by which communications are effectuated, yet the respective receiver wireless communication devices associated with those other respective wireless communication links may nonetheless receive and process communications from the transmitter wireless communication device.

In the context of communications including video information (e.g., streaming video), any of the respective receiver wireless communication devices is then operative to receive such video information from such a transmitter wireless communication device. However, again, it is the communication link between the transmitter wireless communication device and the selected receiver wireless communication device that is employed to determine and/or select the one or more operational parameters by which such video information is communicated to all of the receiver wireless communication devices.

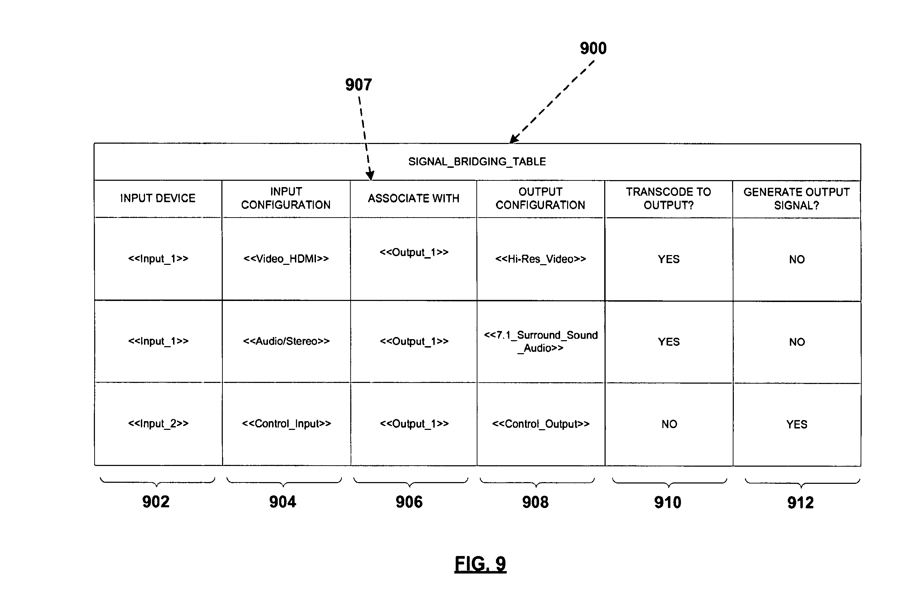

FIG. 9 illustrates a bridging table 900 of one embodiment of the disclosure. The bridging table 900 can, in some embodiments, be constructed by a bridge 340, discussed and illustrated above in FIG. 3. The bridging table can be stored in a device in which the bridge 340 is also located, in a separate device, or the like. Bridging table 900 can be constructed by bridge 340 using configuration/capability information collected from various media devices in a media device network, in order to bridge a link between one or more input devices and one or more output devices. The bridged link can be utilized to bridge control of an output device by an input device, bridge transport of media content between media devices, or the like. As shown in the illustrated embodiment, the bridging table 900 identifies input devices 902 and output devices 906 in a media device network and associates one or more of the input devices 902 with one or more of the output devices 906. Furthermore, bridging table 900 includes configuration information 904 and 908 regarding the various signals that can be transmitted or received by the input devices 902 and the output devices, respectively. For example, the illustrated bridging table 900 identifies an Input 1 device that can transmit Video HDMI and Audio/Stereo input signals; furthermore, the bridging table identifies an Output 1 device that can receive Hi-Res Video and 7.1 Surround Sound audio output signals.

In addition, in some embodiments, the bridging table can associate input devices and output devices such that an input signal from an input device is interpreted as a command to send a certain control signal to a certain one or more output devices. For example, the illustrated bridging table 900 indicates that Control Input signals from Input 2 are associated with Control Output signals to be transmitted to Output 1, such that Control Input signals will be interpreted as a command to generate a certain Control Output signal to be transmitted to Output 1. Note that not all signals transmitted or received by a given media device need to be associated with a same media device. For example, as shown in the illustrated embodiment, the video and audio signals to Output 1 are associated with input signals from Input 1, but the control signals to Output 1 are associated with control signals from Input 2.

The bridge 340 can, in some embodiments, utilize the collected configuration/capability information of the input and output devices to associate input devices with output devices. For example, the illustrated bridging table associates 907 at least two input signals from Input 1, the Video HDMI and Audio/Stereo input signals, with output signals to be received by Output 1, the Hi-Res Video and 7.1 Surround Sound Audio, respectively. Furthermore, bridge 340 can determine, based on the configurations 904 and 908 of the associated input and output signals, whether the association 907 requires that a received input signal are transcoded 910 to match the required output signal configuration, whether a new output signal are generated 912 to be transmitted to the output device 906, or the like. For example, in the illustrated embodiment, input signals from Input 1 that are associated with output signals to Output 1, upon receipt, are transcoded to the output signal configuration, as shown in column 910. In addition, Control Input signals received from the Input 2, upon receipt, will prompt the generation of a corresponding Control Output signal, as shown in column 912.

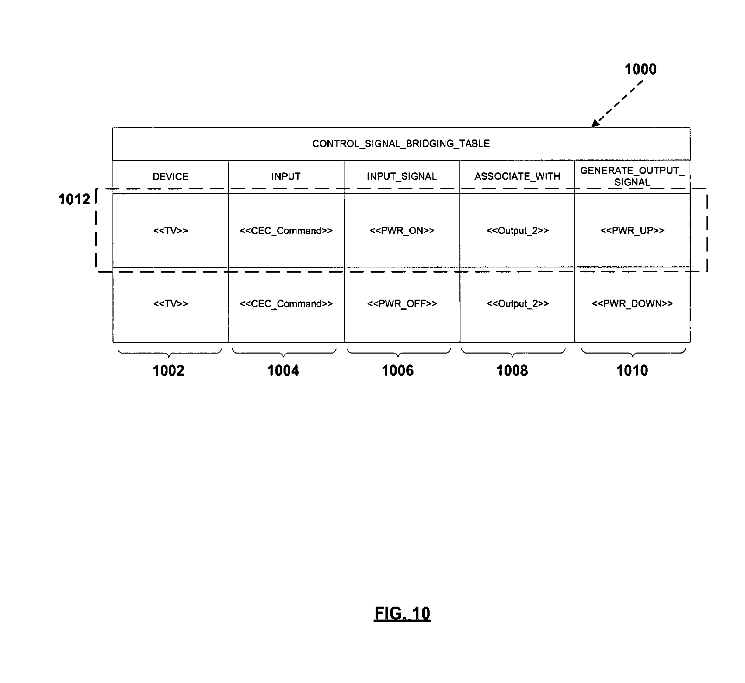

FIG. 10 illustrates a bridging table 1000 of one embodiment of the disclosure. The bridging table 1000 can, in some embodiments, be constructed by a bridge 340, discussed and illustrated above in FIG. 3. The bridging table can be stored in a device in which the bridge 340 is also located, in a separate device, or the like. Bridging table 1000 can be constructed by bridge 340 using configuration/capability information collected from various media devices in a media device network, in order to bridge a link between one or more input devices and one or more output devices. The bridged link can be utilized to bridge control of an output device by an input device, bridge transport of media content between media devices, or the like.

As shown in the illustrated embodiment, bridge 340 can use a bridging table to enable input devices to control output devices across a bridged link by associating certain input signals 1004 transmitted by an input device 1002 with certain output signals 1010 that are to be received and interpreted by an output device 1008. For example, as shown in row 1012 of bridging table 1000, a CEC input control signal from a certain input device including, without limitation, a TV, can be associated with a control output signal to turn on the Output 2 output device. In application, the bridge receives the CEC input control signal, or is able to interpret some input signal as the input control signal, and, based on the association in row 1012, generates the output control signal to turn on the Output 2. The output control signal may be transmitted by the bridge 340 itself, or by some other device. The association of certain input signals with certain output signals can be determined by internal logic, user commands, input information from the input device or some other source, a combination thereof, or the like. For example, as shown in the illustrated embodiment, a user may provide a command, via a user interface, that the bridge 340 is to associate the CEC input control signal "PWR_ON" with the output control signal to turn on Output 2. In some other embodiments, bridge 340 may associate certain signals based on internal logic, including, but not limited to, prior associations of devices and signals.

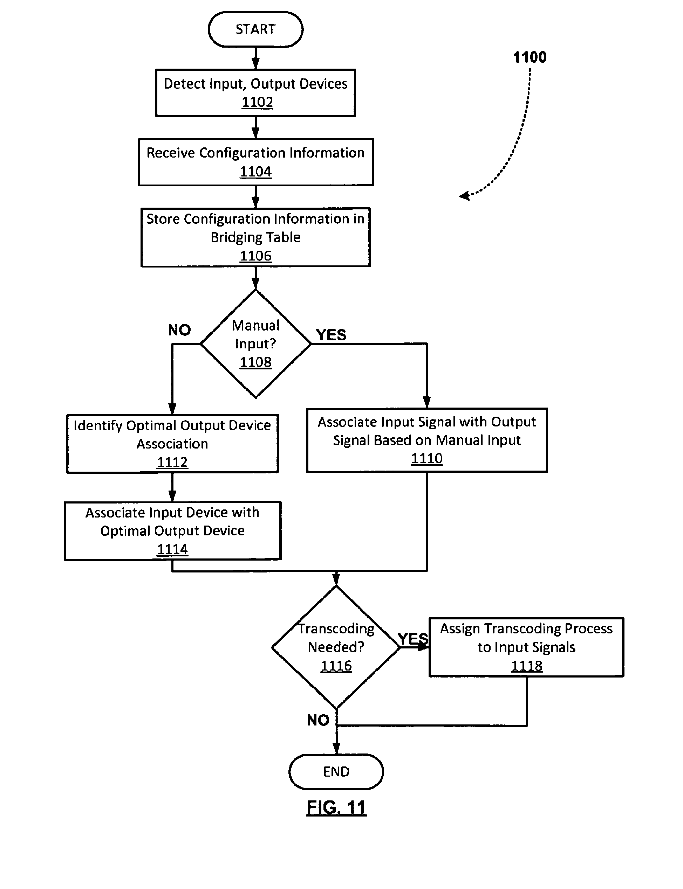

FIG. 11 illustrates a flow diagram of one embodiment of the disclosure. The process 1100 can enable a bridge 340, described and illustrated above in FIG. 3, to associate input controls to one or more output devices. As shown in block 1102, process 1100 can include detecting new input and output devices in the media device network. Detection may include, but is not limited to, receiving a response to a query signal, receiving an initialization signal, or the like. As shown in block 1104, process 1100 can include receiving configuration/capability information from one or more of the input and output devices in the media device network. Configuration/capability information, also referred to herein as "configuration information", may be received from the input and output devices in response to a configuration request or received from devices unsolicited. As shown in block 1106, process 1100 can include storing configuration information in a bridging table. In some embodiments, the bridging table is stored in a memory located on a bridge device. The bridging table may also be stored in a server, an input device, an output device, or the like. As shown in block 1108, process 1100 can include determining whether manual input is provided to assign input signals to output signals. Manual input can include, but is not limited to, a user command, and can be received from an input device, and output device, a user interface on a bridge device, or the like. If manual input is received, as shown in block 1110, process 1100 can include associating an input signal with an output signal based on manual input. Association can include associating a certain input signal transmitted by the input device with one or more certain output signals to be received and interpreted by one or more output devices. In some embodiments, associating an input signal with an output signal determines whether, when the input signal is received by bridge 340 or some other device, the output signal will be generated to be transmitted, by the bridge 340 or some other device, to the output device. For example, where an initialization command from a touchscreen device is associated with one or more output devices, the appropriate initialization command for the appropriate output devices will be generated when the initialization command is received from the touchscreen device. The association may be specific to input signals received from a certain input device, multiple input devices, any other device in the media device network, or the like.

In some other embodiments, association can include assigning media content pathways to be received by one or more output devices. For example, audio/stereo signals generated by an input device may be associated with a particular audio output system including, but not limited to, a surround sound audio system.

If, as shown in blocks 1112 and 1114, if manual input is not received, process 1100 can include identifying and implementing an optimal association between one or more input devices and output devices. An optimal association can be based upon historical association patterns by the bridge 340, historical association patterns by one or more users or input devices, internal logic based upon collected configuration/capability information, or the like. For example, a bridge 340 may identify that a touchscreen device has repeatedly, in the past, been associated with an HDTV's control signals upon user input; based on that identification, the bridge may associate the touchscreen device with the HDTV's control signals without a user input.

As shown in block 1116, process 1100 can include determining whether transcoding is needed. Transcoding may be required if an input signal is not used to prompt generation of a new output signal, but is merely relayed in some form to a receiving device, such as an output device. Transcoding of a relayed signal may be required to ensure that the signal can be interpreted by the output device, to ensure that the signal can be transported across a transport medium, to provide additional security for transport across a transport medium, or the like. If, as shown in block 1118, transcoding is deemed necessary, a transcoding process is assigned to the necessary input signal so that, when the input signal is received, the input signal is transcoded properly.

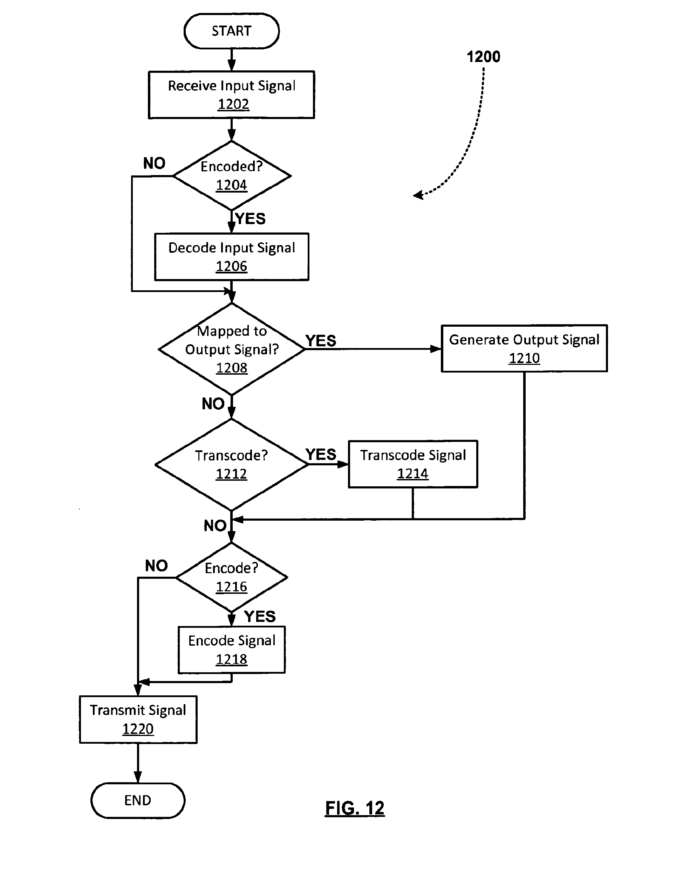

FIG. 12 illustrates a flow diagram of one embodiment of the disclosure. The process 1200 can enable a bridge 340, described and illustrated above in FIG. 3, to handle input signals as determined by the associations of input devices and output devices in a media device network. As shown in block 1202, process 1200 can include receiving an input signal. The input signal may be received directly from the originating input device, an intermediary device, or the like. As shown in block 1204, process 1200 can include determining whether the received input signal is encoded, encapsulated for transport across a transport medium, or the like. If the input signal is encoded, as shown in block 1206, process 1200 can include decoding the input signal. As shown in block 1208, process 1200 can include determining whether the received input signal is associated with an output signal that is to be generated. If so, as shown in block 1210, the appropriate output signal to which the input signal is associated is generated. As shown in blocks 1212 and 1214, process 1200 can include determining whether a signal is to be transcoded; if so, the signal is transcoded. In some embodiments, a signal being relayed by a bridge 340 may need to be transcoded to be interpretable by an output device. As shown in blocks 1216 and 1218, process 1200 can include determining whether a signal, be it a generated output signal or a input signal being relayed, requires encoding for transport across a transport medium. For example, where a relayed input signal or a generated output signal is a CEC Command, but the transport medium is a wireless link, the signal may need to be encoded for transport, which can include, but is not limited to, encapsulating the signal, encoding the signal with additional security protocols, or the like. As shown in block 1220, process 1200 can include transmitting a signal. The signal being transmitted may be an encoded signal, a relayed signal being passed-through without alteration, a generated output signal, or the like. The transmission may be performed by a bridge device, a separate transmitter, or the like.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

As may also be used herein, the terms "processing module", "module", "processing circuit", and/or "processing unit" may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may have an associated memory and/or an integrated memory element, which may be a single memory device, a plurality of memory devices, and/or embedded circuitry of the processing module, module, processing circuit, and/or processing unit. Such a memory device may be a read-only memory, random access memory, volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of the various embodiments of the present invention. A module includes a functional block that is implemented via hardware to perform one or module functions such as the processing of one or more input signals to produce one or more output signals. The hardware that implements the module may itself operate in conjunction software, and/or firmware. As used herein, a module may contain one or more sub-modules that themselves are modules.
While particular combinations of various functions and features of the present invention have been expressly described herein, other combinations of these features and functions are likewise possible. The present invention is not limited by the particular examples disclosed herein and expressly incorporates these other combinations.

## Claims

1. A device comprising:
memory; and
processing circuitry, the processing circuitry and the memory interoperable to:
detect an input device and an output device,
collect configuration/capability information from the input device and the
output device,
using the collected configuration/capability information of the input device
and the output device, associate an input message to be received from the input device with an output message to be received by the output device,
and
in response to receiving the input message from the input device, generate the
output message.

2. The device of Claim 1, the processing circuitry and the memory interoperable to:
enable video streaming over a wireless network, where the input device is a
wireless video source device, the output device is a wired video sink device, the input message is a video stream adapted to be transmitted by the wireless video source device, and the output message is a video stream adapted to be received by the wired video sink device.

3. The device of Claim 1, the processing circuitry and the memory interoperable to:
detect a second output device;
collect configuration/capability information from the second output device;
in response to receiving a user command, disassociate the input message with the
output message and associate the input message with a second output message to be received by the second output device; and
in response to receiving the input message, generate the second output message.

4. The device of Claim 1, the input message from the input device is a command to access functionality of the output device via an interface on the input device.

5. The device of Claim 1, the processing circuitry and the memory interoperable to:
detect an input device, a first output device, and a second output device, the input
device having a first functionality and a second functionality, and the first output device and the second output device located in an automobile environment,
collect configuration/capability information from the input device,
using the collected configuration/capability information of the input device:
associate the first functionality with the first output device to enable the first
output device to access the first functionality, and
associate the second functionality with the second output device to enable the
second output device to access the second functionality,
in response to receiving a first input signal from the input device, the first input
signal associated with the first functionality, generate a first output signal to be received by the first output device, and
in response to receiving a second input signal from the input device, the second
input signal associated with the second functionality, generate a second output signal to be received by the second output device.

6. The device of Claim 1, the input device is associated with the output device based at least in part on previous associations of the input device.

7. The device of Claim 1, the processing circuitry and the memory interoperable to:
decapsulate wired input messages received from the input device over a first
wireless link, and
encapsulate wired output messages to be transmitted to the output device over a
second wireless link.

8. The device of Claim 1, the processing circuitry and the memory interoperable to:
in response to determining that an input message from the input device is of a first
type, relay the input message to the output device; and
in response to determining that an input message from the input device is of a
second type, process the input message to generate a processed output message, the processed output message is of the first type.

9. The device of Claim 8, the first type is a generic message type and the second type is a vendor-specific message type.

10. The device of Claim 1, the processing circuitry and the memory interoperable to:
collect input information from the input device, the input information identifying
an input signal,
collect control information from the output device, the control information
including a first command to control at least one aspect of the output device, associate the input information with the control information, such that the input
signal is associated with the first command, and
in response to receiving the input signal, generate the first command.

11. The device of Claim 10, the processing circuitry and the memory further interoperable to:
associate the input information with the input device,
in response to receiving the input signal from the input device, generate the first
command, and
in response to receiving the input signal from an alternate input device, generate a
second command.

12. A method comprising:
detecting at least one input media device and at least one output media device,
collecting configuration information from the at least one input media device and
the at least one media output device,
using the collected configuration information of the at least one input media device and the at least one output media device, associating at least one input signal to be received from the at least one input media device with at least one output signal to be transmitted to the at least one output media device, and
in response to receiving the input signal from the at least one input media device,
generating the output signal.

13. The method of Claim 12, comprising:
using the collected configuration information of the at least one input media
device and the at least one output media device, identify a substitute signal configuration, the substitute signal configuration is readable by the at least one output media device; and
in response to determining the substitute signal configuration, transcode the input
signal received from the at least one input media device to the substitute signal configuration, such that the output signal is a transcoded input signal.

14. The method of Claim 12, comprising:
detecting a plurality of output media devices;
collecting configuration information from the plurality of output media devices;
using the collected configuration information of the at least one input media
device and the plurality of output media devices, identify a common signal configuration that is common to both the at least one input media device and each of the plurality of output media devices; and
in response to determining the common signal configuration, instruct the at least
one input media device to restrict signals transmitted as part of a multicast to the plurality of output media devices to signals having the common signal configuration.

15. A method comprising:
detecting at least one input device and at least one output device,
collecting input information from the at least one input device, the input
information identifying an input signal,
collecting control information from the at least one output device, the control
information including a control signal to control at least one aspect of the output device,
associating the input information with the control information, such that the input
signal is associated with the control signal, and
in response to receiving the input signal, generating the control signal.
